(19) Europäisches Patentamt
European Patent Office
Office européen des brevets

(11) **EP 2 396 373 B1**

(12) **EUROPÄISCHE PATENTSCHRIFT**

(45) Veröffentlichungstag und Bekanntmachung des Hinweises auf die Patenterteilung:
**18.06.2014 Patentblatt 2014/25**

(21) Anmeldenummer: **10703230.2**

(22) Anmeldetag: **02.02.2010**

(51) Int Cl.:
***C09D 5/00*** *(2006.01)*

(86) Internationale Anmeldenummer:
**PCT/EP2010/000609**

(87) Internationale Veröffentlichungsnummer:
**WO 2010/091802 (19.08.2010 Gazette 2010/33)**

(54) **ANTIREFLEX- / ANTIFOG-BESCHICHTUNGEN**

ANTI-REFLEX/ANTI-FOG COATINGS

REVÊTEMENTS ANTIREFLETS / ANTIBUÉE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.02.2009 DE 102009008605**

(43) Veröffentlichungstag der Anmeldung:
**21.12.2011 Patentblatt 2011/51**

(73) Patentinhaber: **Bayer Intellectual Property GmbH 40789 Monheim (DE)**

(72) Erfinder:
• **HILDENBRAND, Karlheinz 47802 Krefeld (DE)**
• **CAPELLEN, Peter 47803 Krefeld (DE)**
• **BRUDER, Friedrich-Karl 47802 Krefeld (DE)**

(74) Vertreter: **BIP Patents c/o Bayer Intellectual Property GmbH Creative Campus Monheim Alfred-Nobel-Straße 10 40789 Monheim (DE)**

(56) Entgegenhaltungen:
WO-A-2007/074494    WO-A-2008/068154
US-A1- 2004 191 420    US-A1- 2005 137 334
US-A1- 2006 188 664    US-A1- 2008 248 086

• DATABASE WPI Week 200575 Thomson Scientific, London, GB; AN 2005-728382 XP002574361 & JP 2005 262799 A (KONICA CORP) 29. September 2005 (2005-09-29)
• DATABASE WPI Week 200433 Thomson Scientific, London, GB; AN 2004-351244 XP002574362 & JP 2004 083846 A (MITSUBISHI CHEM CORP) 18. März 2004 (2004-03-18)

**Beschreibung**

Die Erfindung betrifft eine Zusammensetzung, enthaltend a) ausgewählte poröse Silica Nanopartikel, b) ein oder mehrere organisch lösliche Polymerharze ausgewählt ist aus der Gruppe enthaltend Polyvinyl(co)polymere und Polyacryl(co)polymere, c) ein oder mehrere ausgewählte UV vernetzbare Reaktivverdünner, d) Lösemittel und e) ein UV Initiatorsystem, die Verwendung der Zusammensetzung zum Beschichten von transparenten Substraten, sowie Substrate, die mit derartigen Rezepturen beschichtet sind.

Das Gesamtsystem zeichnet sich durch gute "Antireflex"-Eigenschaften (erhöhte Transmission) in Kombination mit "Antifog"-Eigenschaften (verringerte Tendenz zum Beschlagen mit Wasserdampf) aus. Je nach Substrat werden weitere mechanische und chemische Verbesserungen der Oberflächeneigenschaften, beispielsweise der Abriebbeständigkeit und der Chemikalienresistenz erzielt. Die so beschichteten Substrate lassen sich aufgrund ihrer Oberflächenhydrophilie mit wässrigen Rezepturen nach dem Polyelektrolytkonzept beschichten.

Die Verbesserung der Eigenschaften von Beschichtungen durch Integration von Silika ist vom Prinzip her schon seit Längerem bekannt. Hierbei können Beschichtungen durch Zumischen von Silkapartikeln beispielsweise hinsichtlich Abrieb, Kratzfestigkeit, Reflexionseigenschaften, Glanz, Antistatik, Entflammbarkeit, UV Beständigkeit, Nicht-Beschlagbarkeit mit Wasserdampf (Antifog), Benetzbarkeit mit Wasser und Chemikalienbeständigkeit verbessert werden.

So hat es in der Vergangenheit nicht an Versuchen gemangelt, Silica- (Siliciumdioxid-) haltige Beschichtungszusammensetzungen mit weiter verbesserten Gesamteigenschaften bezüglich obiger Merkmale bereitzustellen. Allerdings ist es bisher nicht befriedigend gelungen, all diese Merkmale in einem Beschichtungssystem, bzw. bestimmte Eigenschaftskombinationen, insbesondere in der später beschriebenen Kombination, zu vereinigen.

In der DE 103 11 639 A1 werden antistatisch ausgerüstete Formkörper sowie ein Verfahren zu deren Herstellung beschrieben. Zur Lösung der Aufgabe werden in diesem Zusammenhang Lacksysteme aus Acrylat-haltigen Bindemitteln, alkoholischen Lösemitteln, nanoskaligen elektrisch leitfähigen Metalloxiden, nanoskaligen inerten Partikeln wie Siliciumdioxid sowie optional weiteren Zusatzstoffen wie beispielsweise Dispergierhilfsmitteln beschrieben. Die mittlere Teilchengröße der eingesetzten inerten Nanopartikel beträgt 2 nm bis 100 nm, wobei diese in Gehalten von 0,1 Masse% bis 50 Masse% bezogen auf den Trockenfilm eingesetzt werden.

In der JP-A-61-181809 wird eine UV-härtbare Zusammensetzung für Beschichtungen mit guten Haftungseigenschaften sowie hoher Abriebfestigkeit aus $\alpha,\beta$-ungesättigten Carbonsäuren, und kolloidalen Siliciumdioxidpartikeln, dispergiert in Wasser oder niederwertigen Alkoholen, offenbart.

Die JP 2005-179539A beschreibt Antifog-Beschichtungen aus 20 Gew% bis 99 Gew% eines Gemisches, welches aus 0 Gew% bis 80 Gew% feinskaligen Partikeln, zum Beispiel Siliciumdioxid, und 100 Gew% bis 20 Gew% eines Kunststoffs sowie 0,5 Gew% bis 30 Gew% eines Sulfosuccinates mit zwei anionischen Substituenten besteht.

Lackzusammensetzungen auf der Basis polyfunktionaler Acrylsäureestcr zur Herstellung von Beschichtungcn von hoher Transparenz, Witterungsstabilität und Kratzfestigkeit sind in der EP-A 0 050 996 beschrieben. Die Zusammensetzungen enthalten neben den genannten Acrylsäurederivaten einen Polymerisationsinitiator sowie anorganische Füllstoffe wie zum Beispiel Siliciumdioxid mit mittleren Teilchendurchmessern zwischen 1 nm und 1 $\mu$m sowie mit einem Brechungsindex von 1,40 bis 1,60.

In der US-A 4,499,217 werden wasserfreie Lackzusammensetzungen aus kolloidalem Siliciumdioxid mit mittleren Teilchendurchmessern von 10 $\mu$m bis 50 $\mu$m und thermisch aushärtenden Verbindungen, beispielsweise Melamin-Alkyd Harzen, beschrieben. Die ausgehärteten Beschichtungen zeigen eine gute Abriebfestigkeit, gutes Haftvermögen auf verschiedenen Substraten sowie chemische und thermische Resistenz.

Die JP 2001-019874 A offenbart Zusammensetzungen aus (Poly)ethylenglycol(poly)-methylmethacrylat, Acrylamiden, Photoinitiatoren, Dispergierhilfsmitteln und Silika zur Herstellung von Beschichtungen mit hohem Haftvermögen und erhöhter Kratzfestigkeit.

WO 2006/049008 A1 beschreibt eine hydrophile Beschichtung auf der Basis von Silikapartikeln, die in einem hochsiedenden Lösemittel, wie N,N-Dimethylacetamid, dispergiert, mit einer alkoholischen Lösung eines nichtionischen Tensids (L-77) versetzt und anschließend 10 Min. bei 100 °C getempert werden. Die Beschichtung führt zu einer hydrophilen Oberfläche, wobei mit Wasser Randwinkel von 20° bzw. kleiner erreicht werden können. Angewandt wird dieses Verfahren zur Beschichtung von Brillengläsern im Hinblick auf "Antifog" Eigenschaften. Dagegen sind diese Bedingungen für Beschichtungen von Kunststoffsubstraten wegen deren Empfindlichkeit gegen die hier verwendeten Lösemittel ungeeignet.

Eine Gießrezeptur bestehend aus einem Gemisch einer organischen Lösung von Polyvinylbutyral und einer alkoholischen Dispersion von kolloidalem Silika ist in US-A 4,383,057 beschrieben. Bzgl. Trockenmasse kann die Zusammensetzung aus 20 Gew.% bis 95 Gew% Polyvinylbutyral und 80 Gew% bis 5 Gew% Silika bestehen. Hinsichtlich Verbesserung der Stabilitätswerte, wie Kratzfestigkeit, chemische Beständigkeit und Entflammbarkeit wird das Polymer Polyvinylbutyral quervernetzt, wozu beispielsweise mit Alkylethern modifizierte Methylolmelanine eingesetzt werden. Keine näheren Angaben werden bzgl. Oberflächeneigenschaften, wie Hydrophilie oder Wasser-Randwinkel gemacht. Im Vergleich zur vorliegenden Anmeldung handelt es sich nicht um UVvernetzbare Rezepturen.

Sollen, wie in WO 2006/048277 A beschrieben, Oberflächen mit besonders hohen und dichten Silikastrukturen erzeugt werden, so erfolgt die Silika Abscheidung häufig lokal durch Flammhydrolyse aus Silikavorstufen, beispielsweise aus Hexamethyldisilazan oder Tetraethoxysilan. Durch Integration von Fluoralkylsilanen kann der hydrophobe Charakter dieser Beschichtungen noch verstärkt werden.

Die EP-A 337 695 offenbart Siliciumdioxid-Dispersionen zur abriebfesten Beschichtung fester, insbesondere transparenter Substrate. Die Dispersionen enthalten kolloidales Siliciumdioxid mit Partikelgrößen kleiner 100 nm, bevorzugt kleiner 75 nm, besonders bevorzugt kleiner 50 nm, dispergiert in einem protisch substituierten Ester oder Amid einer Acryl- oder Methacrylsäure. Hierbei werden 0,1 bis 2,5 Gewichtsteile Siliciumdioxid pro Gewichtsteil an eingesetztem ungesättigtem Monomer verwendet. Die Dispersionen lassen sich nach Zugabe eines Photoinitiators durch UV-Strahlung auf geeigneten Substraten aushärten.

Die EP-A 0 505 737 beschreibt UV vernetzbare Acrylatsysteme, die Methacrylatfunktionalisierte kolloidale Silika Nanopartikel enthalten. Die entsprechenden Lacke zeigen neben hervorragenden Bewitterungseigenschaften gute Abriebwerte, bspw. Taber Haze von 6-8 % bei 500 Zyklen. Die Methacrylat-funktionalisierten Silika Nanopartikel werden aus Methacryloylpropyltrimethoxysilan und kolloidalen Silika-Nanopartikeln hergestellt Mittlerweile sind Acrylat-modifizierte Silika Nanopartikel auch kommerziell, beispielsweise unter dem Namen "Nanocryl" von der Fa. Nanoresins oder "Highlink Nano" von der Fa. Clariant, erhältlich. Diese Produkte, die als "anti-scratch" und anti-abrasion" Additive angeboten werden, sind wegen der komplexen Chemie in ihren Eigenschaften nicht sehr eng definiert.

Die WO 2009-090003 A beschreibt eine UV-vernetzbare Zusammensetzung, enthaltend nicht modifizierte, protonierte Silika-Nanopartikel, Urethanacrylat, polares Lösemittel und ein UV-Initiatorsystem, wobei der Gewichtsanteil an nicht modifizierten, protonierten Silika-Nanopartikeln den Gehalt an Urethanacrylat übersteigt und bezogen auf die Trockenmasse der Beschichtung mindestens 50.1 Gew-% beträgt, die Verwendung der Zusammensetzung zum Beschichten von Substraten, sowie Substrate, die mit derartigen Rezepturen beschichtet sind.

Diese Beschichtungen zeichnen sich durch sehr gute Kratzfestigkeit, niedrige Trübungswerte (Haze), gute Wiederbeschichtbarkeit sowie gute Haftung auf verschiedenen Substraten aus. Jedoch wird durch diese Beschichtungen keine deutlich erhöhte Transmission beziehungsweise eine reduzierte Reflexion erzielt.

US 2008/248086 A1, WO2008/068154, US2005/137334, W02007/074494, US 2006/188664, JP 2005-262799 A, US2004/191420 sowie JP2004-083856 A beschreiben zwar Zusammensetzungen enthaltend poröse Silica Nanopartikel, ein oder mehrere organisch lösliche Polymerharze, ein oder mehrere UV vernetzbare Verdünner, Lösemittel sowie ein UV-Initiatorsystem, keines der genannten Dokumente beschreibt jedoch eine Zusammensetzung in der vorliegend beanspruchten Kombination noch wird die spezielle Auswahl nahegelegt für die Herstellung von transparenten Beschichtungssystemen gemäß der unten beschriebenen Aufgabe.

In "Technische Optik" (G. Schröder, 1998, Vogel Verlag), werden folgende Bedingungen zum Erzielen einer minimalen Reflektion beziehungsweise maximalen Transmission von elektromagnetischen Wellen bei beschichteten Substraten formuliert:

Eine Reflexminderung durch Interferenz ist dadurch erreichen, dass man zwischen Luft (Brechungsindex n:1.0) und transparentes Substrat (Brechungsindex $n_s$) eine Zwischenschicht mit dem Brechungsindex $n_b$ appliziert. Eine optimale Reflexminderung wird dann erreicht, wenn der Brechungsindex der Beschichtung $n_b$ den Wert aus $\sqrt{n_s}$ erreicht. Hinsichtlich optimaler Schichtdicke gilt die Beziehung $d_b:\lambda/4n_s$. Dementsprechend sind für den sichtbaren Wellenlängenbereich (380 - 780 nm) niedrigere Schichtdicken als für langwelligere elektromagnetische Wellen, beispielsweise aus dem Infrarot Bereich (Wärmestrahlen), einzustellen.

Werden die Optimalwerte nicht erreicht, so ist die Antireflexwirkung vermindert.

Poröse Silica und Glas-Antireflex-Beschichtungen daraus sind bereits bekannt Beispielsweise werden in der WO 97/07056 A monodisperse, poröse, kugelförmige Teilchen im wesentlichen bestehend aus $SiO_2$ mit einer Porenweite von 2-20 nm, die Herstellung dieser Teilchen und ihre Verwendung für die Herstellung von derivatisiertem Kieselgel offenbart. Poröse Silica-Antireflexbeschichtungen von Glas, hergestellt aus $[SiO_x(OH)_y]_n$-Partikel-haltigen Solen umfassend eine erste Partikelfraktion mit einem ersten Partikelgrößenbereich und eine zweite Partikelfraktion mit einem zweiten Partikelgrößenbereich, werden in der WO 03/027015 A und in der WO 03/027034 A beschrieben. Allerdings werden für die Herstellung von hinreichen stabilen Glas-Antireflexbeschichtungen Temperaturen benötigt, die nahe an der Glastemperatur von Glas liegen. Daher ist es nicht möglich, die beschriebenen Beschichtungszusammensetzungen und Beschichtungsverfahren mit Härtungsbedingungen von mehreren Hundert °C auf Kunststoffe zu übertragen.

Eine Aufgabe der vorliegenden Erfindung ist daher die Bereitstellung von transparenten Beschichtungssystemen, aus denen sich unter moderaten Temperaturen Antireflex-Beschichtungen herstellen lassen, so dass sich neben Glas auch transparente Substrate mit niedrigeren Verarbeitungstemperaturen, wie Kunststoffe, beschichten lassen. Die Beschichtungen sollen eine erhöhte Transmission bzw. eine verminderte Reflexion erzielen und gleichzeitig Antifog-Eigenschaften aufweisen. Darüber hinaus sollen die erfindungsgemäßen Lackoberflächen eine gute Haftung zu verschiedenen Substraten aufweisen. Transparente Substrate aus Kunststoff sollen eine erhöhte Resistenz gegen Verwitterung, verbesserte antistatische Eigenschaften, erhöhte chemische Beständigkeit, sowie eine verbesserte Affinität hinsichtlich der Wiederbeschichtbarkeit mit hydrophilen Zusammensetzungen, insbesondere mit verdünnten wässrigen Polyelektrolylösungen aufweisen. Die erfindungsgemäßen Zusammensetzungen sollen durch einfache Technologien, wie Tauchen, Sprühen oder Fluten auf die jeweiligen Substrate applizierbar sein.

Es wurde nun überraschenderweise gefunden, dass transparente Systeme enthaltend Beschichtungszusammensetzungen, die dadurch gekennzeichnet sind, dass sie bestimmte Silica Nanopartikel in einem oder mehreren organisch löslichen Polymerharzen und eine UV-vernetzte Komponente enthalten, die geforderte Kombination aus verbesserten Transmissions-, Reflektions-, Antifog-, Affinitäts- und Oberflächeneigenschaften und besitzen.

Die vorliegende Erfindung betrifft daher eine Zusammensetzung, enthaltend

a) 5 - 15 Gew.-Teile poröse Silica Nanopartikelmit einer monomodalen Partikelgrößenverteilung mit einem gewichtsmittleren Partikeldurchmesser $d_{50}$ = 10 - 50 nm, oder mit einer bimodalen Partikelgrößenverteilung, aufweisend zwei Fraktionen, eine mit einem mittleren Partikeldurchmesser $d_{50}$ = 1 - 10 nm und eine mit einem mittleren Partikeldurchmesser $d_{50}$ = 10-30 nm,

b) 0,5 - 6 Gew.-Teile ein oder mehrere organisch lösliche Polymerharze ausgewählt aus der Gruppe enthaltend Polyvinyl(co)polymere und Polyacryl(co)polymere,

c) 0,2 - 3,0 Gew.-Teile ein oder mehrere UV vernetzbare Reaktivverdünner ausgewählt aus mindestens einem aus der Gruppe Hexandioldiacrylat (HDDA), Dipentaerythritolhexaacrylat (DPHA), Tripropylenglykoldiacrylat (TPGDA), Pentaerythritoltriacrylat (PETA), Pentaerythritoltetraacrylat, Neopentylglykoldiacrylat, Hydroxyethylacrylat, Hydroxyethylmethacrylat (HEMA), Bis-[methacryloyloxy]-ethyl]-phosphat, Glycidylacrylate bzw. Methacrylate sowie funktionelle Silane"

d) Lösemittel

e) 0,02 - 0,1 Gew.-Teile UV Initiatorsystem.

Vorzugsweise sind 75 - 95 Gew.-Teile Lösemittel enthalten, jedoch sind auch höhere Verdünnungen möglich, die dann zu dünneren Lackschichten führen. In einer besonders bevorzugten Ausführungsform enthält die Zusammensetzung a) 8 - 12 Gew.-% poröse Silica Nanopartikel, b) 1 - 4 Gew.% ein oder mehrere organische lösliche Polymerharze, c) 0,5 - 2,0 Gew.-% Reaktivverdünner, d) 80 - 90 Gew.-% Lösemittel und 0,03 - 0,1 Gew.-% UV-Initiator. Es wurde überraschenderweise gefunden, dass eine Beschichtung mit der erfindungsgemäßen Zusammensetzung im beschichteten Produkt sehr gute Produkteigenschaften ermöglicht. Die Beschichtungen weisen Brechungsindizes $n_B$ < 1,45, bevorzugt < 1,40 und ganz besonders bevorzugt < 1,35 auf.

Die Komponente a) poröse Silica Nanopartikel, liegt dispergiert in einem organischem Lösemittel, vorzugsweise in mindestens einem Alkohol, besonders bevorzugt in 1-Methoxy-2-propanol (MOP) vor. Der Partikelgehalt der Dispersion liegt vorzugsweise im Bereich zwischen 10 bis 25 Gew.-%, besonders bevorzugt zwischen 18 und 22 Gew%.-% (bezogen auf die Dispersion).

Poröse Silica Nanopartikel im Sinne der vorliegenden Erfindung sind solche Silica Nanopartikel, mit denen sich poröse Beschichtungen von Glas mit einem Brechungsindex nahe bei 1,22 herstellen lassen. Es sei beispielsweise auf M. Kursawe, V. Hilarius, G.Pfaff, Merck KGaA, "Beschichtungen über Sol-Gel Prozesse" in moderne Beschichtungsverfahren", Wiley-VCH, 2005 verwiesen, in der poröse Silica-Partikel und ihre Anwendung für die Beschichtung von Glas beschrieben werden. Ebenfalls sei hier auf den oben aufgeführten Stand der Technik verwiesen, in dem poröse Silica Nanopartikel nach dem Sol-Gel Verfahren für Antireflexbeschichtungen auf Glas verwendet werden, die bei Temperaturen von mehreren Hundert °C gehärtet werden.

Die eingesetzten Silica Nanopartikel können, wie in WO 97/07056 A beschrieben, monodispers (d.h. mit monomodaler Partikelgrößenverteilung) vorliegen, oder wie in WO 03/027015 A ausgeführt, bimodale Verteilungskurven aufweisen. Eingesetzt werden monodisperse poröse Siliciumdioxid (Silica) Nanopartikel mit Partikeldurchmessern von im Mittel ($d_{50}$) bevorzugt von 20 - 40 nm, oder auch Partikel mit bimodaler Partikelgrößenverteilung enthaltend verschiedene Fraktionen von Partikeln mit Durchmessern im Bereich von bevorzugt 3 - 7 nm, und bevorzugt 20 - 25 nm. Dabei bezieht sich der Partikeldurchmesser auf eine gewichtsmittlere Partikelgröße und der mittlere Partikeldurchmesser $d_{50}$ auf den Wert, bei dem 50 Gew.% der Teilchen einen Durchmesser kleiner oder gleich dso besitzen. Die Teilchengrößenverteilung kann dabei z.B. über Ultrazentrifugation bestimmt werden.
Ganz besonders bevorzugt eingesetzt werden die porösen Silica Nanopartikel "Siliciumdioxid Hybrid-Sol Siosol™ " Artikel Nr. 102264 der Fa. Merck KGaA, Darmstadt.

Bei der Komponente b) handelt es sich um organisch lösliches Polymer (Polymerharz), ausgewählt aus der Gruppe enthaltend Polyvinyl(co)polymere, bevorzugt Polyvinylacetat, und Polyacryl(co)polymere, bevorzugt Polmethylmethacrylat oder Polyethylmethacrylat. Es können auch Polymergemische eingesetzt werden.

Die Reaktivverdünner gemäß Komponente c) sind ausgewählt aus mindestens einem aus der Gruppe Hexandioldiacrylat (HDDA), Dipentaerythritolhexaacrylat (DPHA), Tripropylenglykoldiacrylat (TPGDA), Pentaerythritoltriacrylat (PETA), Pentaerythritoltetraacrylat, Neopentylglykoldiacrylat, Hydroxyethylacrylat, Hydroxyethylmethacrylat (HEMA), Bis-[methacryloyloxy]-ethyl]-phosphat, Glycidylacrylate bzw. Methacrylate sowie funktionelle Silane, wie 3-Methacryloxypropyltrimethoxysilan. Es können auch Gemische dieser Reaktivverdünner eingesetzt werden.

Bei Komponente d), Lösemittel; handelt es sich um polare, vorzugsweise protische Lösemittel, in denen sowohl die porösen Silica-Nanopartikel, als auch die restlichen Komponenten, insbesondere die Bindemittel der Rezeptur kompatibel sind. Es kommen insbesondere Alkohole, wie Methanol, Ethanol, Isopropanol, Ethylenglykol, Propylenglykol (1,2-Propandiol), Propylglykol (Ethylenglykol-n-propylether), Methoxypropanol (MOP, 1-Methoxy-2-propanol) oder Diacetonalkohol (DAA, 4-Hydroxy-4-methyl-2-pentanon), Ketone, wie Aceton, Methylethylketon, Methylisobutylketon, Ester, wie Ethylacetat, Butylacetat und Propylenglykolmonomethyletheracetat, Ether, wie Ethylenglykol-n-propylether, Tetrahydrofuran, sowie amidische Lösemittel, wie N,N-Dimethylacetamid oder N-Methylpyrrolidon in Frage. Ganz besonders bevorzugt sind Alkohole, wie MOP und/oder DAA. Es können natürlich auch Lösemittelgemische eingesetzt werden, wobei auch geringe Mengen von an sich in reiner Form nicht geeigneten Lösemitteln, wie Toluol enthalten sein können.

Bei der Komponente e), dem UV-Initiatorsystem, handelt es sich um Systeme, die an der Luft oder unter Inertgas die Polymerisation der Acrylatkomponenten unter Einstrahlung von UV Licht initiieren. Derartige Systeme, die üblicherweise in einigen Gew.% (ca. 2 bis 10) bzgl. der eingesetzten Acrylatmenge zugesetzt werden, sind bspw. unter dem Produktnamen "Irgacure®" oder Darocure® erhältlich. Häufig werden auch Gemische, wie bspw. Irgacure 184/Darocure TPO eingesetzt. Hierbei ist Irgacure 184 ® Hydroxycyclohexyl-phenyl-keton, und Darocure TPO® Diphenyl (2,4,6-trimethylbenzoyl)-phosphinoxid).

Die nachträgliche Vernetzung des Beschichtungssystems kann statt über UV- auch über Elektronenstrahlbehandlung oder durch UV- in Kombination mit Elektronenstrahlbehandlung erfolgen.

Hinsichtlich der Substrate, die durch die Applizierung der erfindungsgemäßen Lackrezepturen weiter veredelt werden können, besteht im Rahmen der vorliegenden Erfindung eine breite Auswahlmöglichkeit an transparenten und transluzenten aber auch nichttransparenten Materialien wie Keramik, Marmor oder Holz. Wegen der exzellenten "transparenten Protektiveigenschaften" der neuartigen Lacksysteme, sind naturgemäß hochtransparente Substrate bevorzugt. Hierbei sind transparente thermoplastische Polymere beispielsweise aus Polycarbonat (Makrolon®, Apec®) oder Polycarbonatblends (Makroblend®, Bayblen®), Polymethylmethacrylat (Plexiglas®), Polyester, cycloaliphatische Olefine, wie Zeonor®, sowie Glas ganz besonders bevorzugt.

Polycarbonate für die erfindungsgemäßen Zusammensetzungen sind Homopolycarbonate, Copolycarbonate und thermoplastische Polyestercarbonate.

Die erfindungsgemäßen Polycarbonate und Copolycarbonate haben im Allgemeinen mittlere Molekulargewichte (Gewichtsmittel) von 2 000 bis 200 000, bevorzugt 3 000 bis 150 000, insbesondere 5 000 bis 100 000, ganz besonders bevorzugt 8 000 bis 80 000, insbesondere 12 000 bis 70 000 (bestimmt nach GPC mit Polycarbanat-Eichung).

Zur Herstellung von Polycarbonaten für die erfindungsgemäßen Zusammensetzungen sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer, Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren.

Bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Diese oder andere geeignete Bisphenolverbindungen werden mit Kohlensäureverbindungen, insbesondere Phosgen oder beim Schmelzeumesterungsprozess Diphenylcarbonat bzw. Dimethylcarbonat, unter Bildung der jeweiligen Polymere umgesetzt.

Als weitere Komponenten können den Rezepturen Beschichtungsadditive, bspw. Verlaufsmittel sowie Stabilisatoren gegen UV Licht, wie Triazole und sterisch gehinderte Amine zugegeben werden.

Die erfindungsgemäßen Zusammensetzungen können, wie bereits erwähnt, als abrieb- bzw. kratztestbeständige Beschichtungen mit guten Antireflex- und Antifog-Eigenschaften eingesetzt werden, d.h. als Protektivbeschichtungen und auch als Substratschichtcn für weitere Beschichtungen eingesetzt werden.

Typische Schichtdicken liegen im Bereich von 0.2 bis 200 μm, bevorzugt zwischen 1 und 50 μm, ganz bevorzugt zwischen 2 und 20 μm.

Anwendungsbereiche der antireflektierenden, abrieb- bzw. kratzfestbeständigen hochtransparenten Protektivbeschichtungen liegen in Bereichen, in denen Glas durch Kunststoffe, wie Polycarbonat ersetzt werden, bspw. im Automobilbereich, bei Architekturverglasung oder in optischen Bereichen, wie Brillengläser. Die erfindungsgemäßen Beschichtungen zeigen gegenüber bekannten, konventionellen Kratzfestbeschichtungen zusätzlich zu den besonders guten Antireflex-Eigenschaften auch noch Antifog-Eigenschaften sowie antistatische Effekte. Antifog-Eigenschaften können leicht durch Anhauchen der entsprechenden Oberflächen nachgewiesen werden, wobei bei guten Antifog-Eigenschaften ein Beschlagen durch Luftfeuchtigkeit verhindert wird.

Gegenstand der vorliegenden Erfindung sind weiterhin Formkörper, aufweisend eine Oberfläche, die mit der erfindungsgemäßen Zusammensetzung oder dem erfindungsgemäßen Verfahren beschichtet wird.

Gegenstand der vorliegenden Erfindung sind weiterhin mehrschichtige Erzeugnisse enthaltend eine Substratschicht, die mindestens auf einer Seite eine zweite Schicht aufweist, wobei diese zweite Schicht aus einer erfindungsgemäßen Zusammensetzung hergestellt wird. Die mehrschichtigen Erzeugnisse können eine weitere Schicht aus kationischen oder zwitterionischen Verbindungen enthalten.

**Beispiele**

**A. Komponenten**

1. Silica Nanopartikel:

    a. Siliciumdioxid Hybrid-Sol Siosol™

        Poröse Siliciumdioxid Nanopartikel der Fa. Merck (monomodale Partikelgrößenverteilung mit $d_{50}$ = 33 nm), 21 gew.-%ige Dispersion in 1-Methoxy-2-propanol (MOP) bzw. 21,5 % gew.%ige Dispersion in Diacetonalkohol

    b. Higlilink®Nano G Silica Organosol:

        30 gew.-%ige Dispersionen von nicht porösen Silica Nanopartikeln in Alkoholen, wie Isopropanol, Ethylenglykol oder Propylglykol, mit einer mittleren Partikelgröße von 13 nm. Diese Partikel wurden in einem Vergleichsbeispiel eingesetzt.

2. Thermisch härtende Polymer-Harze

    a. Degalan® M 912:    Substanzpolymerisat, granuliert auf Basis Methylmethacrylat der Fa. Degussa. Molekulargewicht (Mw): 180 000 g/mol, Tg (Glastemperatur): 122°C

    b. Elvacite® 2041:    Hochmolekulares Methylmethacrylat Polymer, Fa. Lucite International Inc., Mw: 410 000 g/mol, Tg: 105°C

3. UV vernetzbare Urethanacrylate

    a. HDDA:        1,6-Hexandioldiacrylat der Fa. Alfa Aesar

    b. Desmolux U 100:    ungesättigtes aliphatisches Urethanacrylat der Fa. Bayer MaterialScience AG

**B. Substrate**

1. Polycarbonat-Platten (Makrolon® der Fa. Bayer MaterialScience AG), Dimensionen: 100x150x3mm, bestehend aus:

    a. Makrolon® M 2808 (Bisphenol A Polycarbonat: mittelviskoses Bisphenol A-Polycarbonat, MFR 10 g/10min nach ISO 1133 bei 300°C und 1,2kg, ohne UV-Stabilisierung und Formtrennmittel)

    b. Makrolon® A12647 (mittelviskoses Bisphenol A-Polycarbonat mit UV-Stabilisator und Formtrennmittel; MFR 13 g/10min nach ISO1133 bei 300°C und 1,2kg)

2. Folien

a. Polycarbonat-Folie: Makrofol® DE 1-1 der Fa. Bayer MaterialScience AG, Schichtdicke: 375 μm, beidseitig hoch-glänzend

C. **Prüfmethoden**

**Herstellung und Prüfung der beschichteten Erzeugnisse**

**a) Brechungsindex**

Der Brechungsindex $n_B$ und der Imaginäranteil des Brechungsindexes k (im Folgenden auch als Absorptionskonstante k bezeichnet) der Beschichtungen wurden aus den Transmissions- und Reflexionsspektren erhalten. Dazu wurden ca. 100 - 300 nm dicke Filme der Beschichtung auf Quarzglasträger aus verdünnter Lösung aufgeschleudert. Das Transmissions- und Reflexionsspektrum dieses Schichtpaketes wurde mit einem Spektrometer der Firma STEAG ETA-Optik, CD-Measurement System ETA-RT gemessen und danach die Schichtdicke und der spektrale Verlauf von n und k an die gemessenen Transmissions- und Reflexionsspektren angepasst. Dies geschieht mit der internen Sollware des Spektrometers und erfordert zusätzlich die n und k Daten des Quarzglassubstrates, die in einer Blindmessung vorab bestimmt wurden. k hängt mit der Abklingkonstante der Lichtintensität α wie folgt zusammen:

$$k = \frac{\lambda \cdot \alpha}{4\pi}$$

λ□ □ ist die Wellenlänge des Lichtes.

Transmission und Reflexion: Zur Spektroskopie wird das Photometer Lamda 900 der Fa. Perkin Elmer eingesetzt, wobei nach ASTM E 308 im Wellenlängenbereich von 200 - 2300 nm gemessen wird. Gemessen wird mit Hilfe einer Photometerkugel, sodass bei senkrechter Einstrahlung neben direkten auch diffuse Anteile berücksichtigt werden.

b) Ermittlung der Antifog-Eigenschaften

b.1) Hauchtest: Das Substrat wird zur Hälfte mit der zu prüfenden Beschichtungszusammensetzung beschichtet, das beschichtete Substrat wird angehaucht. Im Falle von Antifog-Effekten beschlägt die beschichtete Seite nicht, während das nicht beschichtete Substrat opak beschlägt.

b.2) Gewächshaustest: Die beschichteten Platten werden in einem Winkel von 60°C mit der beschichteten Seite nach unten an der Decke eines Modellgewächshauses befestigt, so dass die wasserspreitende Wirkung durch Beobachtung der Tröpfchenbildung verglichen werden kann. Im Modellgewächshaus wird mittels einer Heizquelle Wasser verdampft, so dass sich eine Temperatur von 50°C und eine Luftfeuchtigkeit von 100% einstellt. Die Platten werden 6 h unter diesen Bedingungen belassen und anschließend in einem trockenen Heizschrank 4 h bei 40°C erhitzt. Anschließend wiederholt man diese Prozedur im Modellgewächshaus und im Heizschrank immer abwechselnd, solange bis der wasserspreitende Effekt verschwindet (ersichtlich an der Tropfenbildung auf der Platte). Falls der wasserspreitende Effekt nach 80 Zyklen immer noch wirksam ist, wird die Langzeitperformance positiv beurteilt und der Test abgebrochen.

c) Die Schichtdicke wird mittels Weißlichtinterferometer (ETA SPB-T, ETA-Optik GmbH) bestimmt.

d) Die Haftung wird bestimmt nach DIN EN ISO 2409 (Gitterschnittprüfung). Ein Gitterschnitt Kennwert 0 bedeutet hierbei, dass alle Schnittränder vollkommen glatt sind und keines der Gitterschnittquadrate abgeplatzt ist. Ein Gitterschnitt 5 bedeutet, dass alle Gitterschnittquadrate abgeplatzt sind.

e) Trübung: Die Trübung (Haze) wird nach ASTM D 1003-00 über Weitwinkel Lichtstreuung ermittelt. Die Angaben erfolgen in %Haze (H), wobei niedrige Werte, bspw. 1% H niedrige Trübung sowie hohe Transparenz und Werte kleiner 1% H exzellente Transparenz bedeuten.

f) <u>Abrasionstest:</u> Mittels Reibradverfahren (DIN 53 754) wird die Verschleißfestigkeit (Abrieb) über die Zunahme des Streulichts bestimmt. Eingesetzt wurde ein Taber Abrasionsgerät Modell 5151 mit CS-10F Calibrase Reibräder (Typ IV) mit 500 g Auflagegewicht pro Rad. Die Haze Werte werden bspw. nach 100, 500 oder 1000 Zyklen gemessen, wobei niedrige Werte, bspw. 0.5 % H eine exzellente Abriebbeständigkeit bedeuten.

g) <u>Yellowness Index (YI, ASTM E 313):</u> Der YI Test ist ein Maß für die Vergilbung der Testprobe durch UV Licht. Niedrige Werte, bspw. YI:0.5 bedeuten eine geringe Vergilbung.

h) <u>Langzeitstabilität und Bewitterungstests</u>

Zur Ermittlung der Langzeitbeständigkeit werden die Tests nach folgenden Stressbedingungen ermittelt:

<u>Wasserlagerung:</u> Die Probe wird nach ASTM 870-02 über 10 Tage in 65+/- 2 °C warmem Wasser gelagert, wobei täglich o. g. Tests durchgeführt werden.

<u>Kochtest:</u> Die Proben werden in kochendes Wasser gelegt, wobei nach 0.5, 1, 2, 3, und 4 h o.g. Werte ermittelt werden. Werden bspw. 4 h Kochtest schadlos passiert, kann eine gute Langzeitbeständigkeit prognostiziert werden.

<u>Bewitterung:</u> Im Vergleich zum Naturversuch erfolgt eine beschleunigte Ermittlung der Belichtungs-/Bewitterungsstabilität von Werkstoffen. Mit sog. Wheater-Ornetern® können die wichtigsten Klimafaktoren (Strahlung, Wärme, Feuchte, Regen) simuliert werden. Bspw. erfolgt der sog. Xenon WOM nach ASTM G 155, der Xenon High Energie Test nach DIN EN ISO 4892-2.

## D. Herstellung der Beschichtungen

**Beispiel 1:** <u>Lösen des Polymerharzes</u>

Degalan® M 912: 12.5 g Degalan M 912 wurden in 87.5 g Diacetonalkohol (DAA) unter Rühren bei 80°C gelöst, wobei eine klare 12.5%ige Polymerlösung erhalten wurde.

Viskosität: 94,0 mPa · s $\pm$ 0,3 mPa · s

**Beispiel 2 (erfindungsgemäß):** Herstellen einer 15 gew.-%igen Gießformulierung, enthaltend Degalan M 912 in Kombination mit HDDA sowie 70 Gew.-% poröse Silica Nanopartikel in Trockenfilmmasse

In einem 500 ml Becherglas mit Magnetrührer werden folgende Komponenten unter Rühren zu einer homogenen Gießlösung vermischt:

| | |
|---|---|
| 56.0 g | 12.5%ige Degalanlösung M 912 in DAA (Beispiel 1) |
| 54.0 g | Diacetonalkohol |
| 113.0 g | Silica Nanopartikel Siliciumdioxid Hybrid-Sol Siosol™ 21%ig in 1-Methoxy-2-propanol (MOP) |
| 3.0 g | 1,6- Hexandioldiacrylat (HDDA), Fa. Alfa Acsar |
| 0.15 g | Irgacure184® (1-Hydroxy-cyclohexyl-phenyl-keton, Photoinitiator, Fa. CIBA) |

Es wurde noch 10 Minuten nachgerührt, wobei eine transparente, farblose Gießlösung erhalten wurde, die über ein 3 $\mu$m Papierfilter in eine braune Glasflasche filtriert wurde.

**Beispiel 3 (erfindungsgemäß):** Herstellen einer 15 gew.-%igen Gießformulierung, enthaltend Elvacite® 2041 in Kombination mit HDDA sowie 70 Gew.-% poröse Silica Nanopartikel in Trockenfilmmasse

Aus folgenden Komponenten wurde, wie in Bsp. 2 beschrieben, eine Gießlösung hergestellt:

| | |
|---|---|
| 56.0 g | 12.5%ige Elvacite 2041 -Lösung in DAA (hergestellt analog Bsp. 1) |
| 56.0 g | Diacetonalkohol |
| 110.5 g | Silica Nanopartikel Siliciumdioxid Hybrid-Sol Siosol™, 21%ig in 1-Methoxy 2-propanol (MOP) |
| 3.0 g | 1,6-Hexandioldiacrylat (HDDA), Fa. Alfa Aesar |
| 0.16 g | Irgacure184® (1-Hydroxy-cyclohexyl-phenyl-keton, Photoinitiator, Fa. CIBA) |

**Beispiel 4** (nicht erfindungsgemäß): Herstellen einer 15 gew.-%igen Gießformulierung, enthaltend Elvacite® 2041 in Kombination mit HDDA sowie 70 Gew.-% nicht poröse Silica Nanopartikel in Trockenfilmmasse:

| | |
|---|---|
| 56.0 g | 12.5%ige Elvacite 2041 -Lösung in DAA (hergestellt analog Bsp. 1) |
| 56.0 g | Diacetonalkohol |
| 110.5 g | Silica Nanopartikel Highlink® Nano G Silica Organosol, 21%ig in 1-Methoxy-2-propanol (MOP) |

(fortgesetzt)

3.0 g     1,6-Hexandioldiacrylat (HDDA), Fa. Alfa Aesar

**Beispiel 5** (nicht erfindungsgemäß): Herstellen einer 8 gew.-%igen Grießformulierung, enthaltend Elvacite® 2041, ohne Reaktivverdünner (HDDA) sowie 70 Gew.-% poröse Silica Nanopartikel in Trockenfilmmasse
Aus folgenden Komponenten wurde, wie in Bsp. 2 beschrieben, eine Gießlösung hergestellt:

7.0 g     12.5%ige Elvacite 2041 -Lösung in DAA (hergestellt analog Bsp. 1)
11.0 g     Diacetonalkohol
18.5 g     Nanopartikel: Siliciumdioxid Hybrid-Sol Siosol™, 21%ig in 1-Methoxy-2-propanol (MOP)

**Beispiel 6** (nicht erfindungsgemäß): Herstellen einer 15 gew.-%igen Gießformulierung, enthaltend Desmolux U 100 sowie 70 Gew.-% poröse Silica Nanopartikel in Trockenfilmmasse, ohne organisch lösliche Polymerharzkomponente
Aus folgenden Komponenten wurde, wie in Bsp. 2 beschriebcn, eine Gießlösung hergestellt:

56.0 g     Desmolux U 100
10.0 g     Diacetonalkohol
114.0 g     Nanopartikel: Siliciumdioxid Hybrid-Sol Siosol™, 21%ig in 1-Methoxy-2-propanol (MOP)
0.5 g     Irgacure 184® (1- Hydroxy-cyclohexyl-phenyl-keton, Photoinitiator, Fa. CIBA)

## Beschichten von Substratplatten

Die in den Beispielen **2 - 6** beschriebenen Dispersionen wurden durch Fluten auf verschiedene Substrate aufgebracht.
Als Substrate wurden in Beispielen **7 - 13** Platten mit den Flächendimensionen 10 x 15 cm verwendet.

Substrat 1: Makrolon® M 2808

Substrat 2: Makrolon® A1 2647

Die Platten wurden zunächst mit Isopropanol gereinigt und mit ionisierter Luft trocken geblasen. Die durch Fluten applizierte Gießlösung wurde zunächst 5 Min. bei Raumtemperatur (RT) abgelüftet und anschließend 30 Min. bei 80°C getrocknet. Danach wurde die Beschichtung einer UV-Härtung mit Hilfe einer Hg Lampe unterworfen, wobei eine Energie von ca. 5 J/cm$^2$ eingestrahlt wurde.
**Beispiel 7:** Platte aus Substrat 1, geflutet mit einer Gießlösung gem. Beispiel 2. Für den Antifog-Test und den Test auf chemische Beständigkeit wird das Substrat jeweils nur zur Hälfte geflutet.

**Beispiel 8:** (Vergleichsbeispiel): Platte aus Substrat 1, ungeflutet

**Beispiel 9:** Platte aus Substrat 2, geflutet mit einer Gießlösung gem. Beispiel 2. Für den Antifog-Test und den Test auf chemische Beständigkeit wird das Substrat jeweils nur zur Hälfte geflutet.

**Beispiel 10:** (Vergleichsbeispiel): Platte aus Substrat 2, ungeflutet

**Charakterisierung der Beispiele 7 - 10:**

In den **Beispielen 7 und 9** wurden hochtransparente, gut haftende Beschichtungen erhalten.

a) **Beispiele 7 und 9 -** Schichtdicke:

Oben: 3.1 μm, unten: 1.4 μm (keilförmige Schichtdicke als Folge des Flutprozesses)

b) Trübung mittels Hazemeter nach ASTM 1003-00

**Beispiele 7 und 9 -** Haze: 0.3%, wobei dieser niedrige Wert einer hervorragenden Transparenz entspricht.

Dagegen wurde beim nicht beschichteten Substrat (**Beispiel 8**) ein Haze Wert von 0.9% ermittelt.

c) Abriebbeständigkeit nach keibradverfahren (Taber Test) DIN 53 754 mit Calibrase CS-10F Rädern **Beispiele 7 und** 9 - ΔHaze: 9 % nach 100 Zyklen.
Dagegen wurde bei den nicht beschichteten Substraten (**Beispiele 8 und 10**) nach demselben Verfahren ein deutlich höherer Abrieb von ΔHaze: 29 % ermittelt.

d) **Beispiele 7 und 9 -** Der Tape Test nach Gitterschnitt zeigte vollkommen glatte Ränder und konnte so mit Kennzahl 0 nach DIN EN ISO 2409 beurteilt werden.
Demnach zeigt die Beschichtung zu beiden Substraten eine perfekte Haftung.

f) Antifog-Eigenschaften: die nur zur Hälfte erfindungsgemäß beschichteten Platten wurden angehaucht. Dabei beschlug der nicht beschichtete Teil und wurde opak, während bei dem beschichteten Teil keine Veränderung festgestellt werden konnte, d.h. die Transparenz blieb vollständig erhalten.

g) **Beispiele 7 und 9 -** Brechungsindex der Beschichtung: 1.315

h) Transmission/Reflexion: Während die Transmission bei den unbeschichteten **Platten** (**Beispiele 8 und 10**) bei ca. 90% im sichtbaren Wellenlängenbereich liegt, konnte durch die Beschichtung (**Beispiele 7 und 9**) ein Wert von ca. 93 bis 95% erreicht werden.

i) Chemische Beständigkeit: Während die nicht beschichtete Seite der nur zur Hälfte erfindungsgemäß beschichteten Platten in erwarteter Weise sofort eintrübte, zeigte die beschichtete Substratseite eine deutlich bessere Resistenz (kaum Trübung) gegenüber Aceton.

**Beispiel 11**: Platte aus Substrat 1, geflutet mit einer Gießlösung gem. Beispiel 3

| | |
|---|---|
| Schichtdicke (geflutete Beschichtung): | 1.5 - 3.0 $\mu$m |
| Haze: | 0.43% |
| Brechungsindex: | 1.36 |
| Abriebbeständigkeit: | ΔHaze (100 Cyclen): 11% |
| Transmission (450-800 nm): | ca. 93 - 95% |
| Antifog: | Kein Beschlagen der beschichteten Seite durch Anhauchen, während die unbeschichtete Oberfläche beim Anhauchen trüb wurde. |

**Beispiel 12**: (Vergleichsbeispiel): Platte aus Substrat 1, geflutet mit einer Gießlösung gem. Beispiel 4

Nach der UV - Vernetzung wurde eine Beschichtung mit feinen Haarrissen erhalten. Weitere Tests wurden daher nicht durchgeführt.

**Beispiel 13**: (Vergleichsbeispiel): Platte aus Substrat 1, geflutet mit einer Gießlösung gem. Beispiel 5

Nach der UV - Vernetzung wurde eine transparente, fehlerfreie Beschichtung, mit folgenden Eigenschaften erhalten:

| | |
|---|---|
| Schichtdicke: | 0.8 - 1.4 $\mu$m |
| Haze: | 0.13 % |
| Brechungsindex: | 1.48 |

Überraschenderweise führte die hier beschriebene Beschichtung zu keiner deutlichen Absenkung des Brechungsindex und damit zu keinen nennenswerten Antireflex Eigenschaften, weshalb keine weiteren Tests durchgeführt wurden.

**Beispiel 14**: (Vergleichsbeispiel): Platte aus Substrat 1, geflutet mit einer Gießlösung gem. Beispiel 4 (Gießlösmg mit nicht porösen Silica Nanopartikeln):

| | |
|---|---|
| Schichtdicke (geflutete Beschichtung): | 2.0 - 3.5 μm |
| Haze: | 0.43% |
| Brechungsindex: | 1.48 |
| Abriebbeständigkeit: | ΔHaze (100 Cyclen): 11% |
| Transmission (450-800 nm): | ca. 91 % |
| Antifog: | Kein Beschlagen der beschichteten Seite durch Anhauchen, während die unbeschichtete Oberfläche beim Anhauchen trüb wurde. |

Wie die Ergebnisse zeigen, wurde durch Ersatz der porösen Silica Nanopartikeln (Siliciumdioxid Hybrid-Sol Siosol™ aus Bsp. 3) durch nicht poröse Analoga (Highlink® Nano G Silica Organosol aus Bsp. 5) Beschichtungen mit einem deutlich höheren Brechungsindex und geringerer Transmission (verringerte Antireflexwirkung) erhalten.

**Kontinuierliche (Konti-)Beschichtung von Substratfolien**

**Beispiel 15:** Beschichten von Makrofol® DE 1-1 -Folie mittels Pilotbeschichtungsanlage:

Eine 375 μm dicke Polycarbonatfolie (Makrofol® DE 1-1) wurde mit der oben beschriebenen Gießlösung beschichtet, wobei folgende Gießparameter eingehalten wurden:

Bahngeschwindigkeit: 2m/min
Auftragsverfahren: Reverse Rollercoating

Trocknung mit Warmluft: 1. Zone: 50°C, 2. Zone: 90°C, 3. Zone: 100°C, jede der Trocknerzonen ist 1m lang, sodass eine Gesamtverweilzeit von 1.5 Minuten resultiert.
Trocknung mit IR Strahler: Im Anschluss an die Warmluftzonen Trocknung erfolgte eine weitere Trocknung mittels IR Strahler bei einer T von 75°C.
UV Vernetzung: Im Anschluss an die IR Trocknung erfolgt hinsichtlich Vernetzung der Acrylatkomponenten eine UV Vernetzung mittels einer Hg Dampflampe entsprechend einer UV Dosis von ca. 550 mJ/cm$^2$.
Es wurde eine fehlerfreie, ca.360 nm dicke, hochtransparente Beschichtung erhalten.
Die Ausprüfung der Folie mit Hilfe der oben beschriebenen Methoden lieferte folgende Messergebnisse:

| | |
|---|---|
| Haze: | 0.3% |
| Brechungsindex: | 1.315 |
| Abriebbeständigkeit: | ΔHaze (100 Cyclen): 9% |
| Haftung auf M 2808: | sehr gut: Kennzahl 0 |
| Transmission (450-800 nm): | ca. 93 - 95% |
| Antifog: | Kein Beschlagen der beschichteten Seite nach Anhauchen, während die unbeschichtete Oberfläche beim Anhauchen trüb wurde. |

**Patentansprüche**

1. Zusammensetzung, enthaltend

a) 5 - 15 Gew.-Teile poröse Silica Nanopartikel mit einer monomodalen Partikelgrößenverteilung mit einem gewichtsmittleren Partikeldurchmesser d50 = 10 - 50 nm, oder mit einer bimodalen Partikelgrößenverteilung, aufweisend zwei Fraktionen, eine mit einem gewichts-mittlereren Partikeldurchmesser d50 = 1 -10 nm und eine mit einem gewichts-mittleren Partikeldurchmesser d50 = 10-30 nm,
b) 0,5 - 6 Gew.-Teile ein oder mehrere organisch lösliche Polymerharze ausgewählt aus der Gruppe enthaltend Polyvinyl(co)polymere und Polyacryl(co)polymere,
c) 0,2 - 3,0 Gew.-Teile ein oder mehrere UV vernetzbare Reaktivverdünner ausgewählt aus mindestens einem aus der Gruppe Hexandioldiacrylat, Dipentaerythritolhexaacrylat, Tripropylenglykoldiacrylat, Pentaerythritoltriacrylat, Pentaerythritoltetraacrylat, Neopentylglykoldiacrylat, Hydroxyethylacrylat, Hydroxyethylmethacrylat, Bis-[methacryloyloxy]-ethyl]-phosphat, Glycidy-lacrylate bzw. Methacrylate sowie funktionelle Silane,
d) Lösemittel
e) 0,02 - 0,1 Gew.-Teile UV Initiatorsystem.

2. Die Zusammensetzung gemäß Anspruch 1, wobei die Silica Nanopartikel in einem organischen Lösungsmittel dispergiert sind.

3. Beschichtungszusammensetzung nach Anspruch 1, **gekennzeichnet dadurch, dass** der Brechungsindex $n_B$ < 1.45 ist.

4. Beschichtungszusammensetzung nach Anspruch 1, **gekennzeichnet dadurch, dass** der Brechungsindex $n_B$ < 1.40 ist.

5. Beschichtungszusammensetzung nach Anspruch 1, **gekennzeichnet dadurch, dass** der Brechungsindex $n_B$ < 1.35 ist.

6. Die Zusammensetzung gemäß Anspruch 1, wobei

a) poröse Silica Nanopartikel Partikel mit einer monomodalen Partikelgrößenverteilung mit einem gewichtsmitt-leren Partikeldurchmesser $d_{50}$ = 10 - 50 nm, oder mit einer bimodalen Partikelgrößenverteilung, aufweisend zwei Fraktionen, eine mit einem mittleren Partikeldurchmesser dso = 1 - 10 nm und eine mit einem mittleren Partikeldurchmesser $d_{50}$ = 10-30 nm, sind;
b) Polymethyl(meth)acrylat ist;
c) UV- oder Elektronenstrahl vernetzbares, ethylenisch ungesättigtes niedermolekulares Acrylat oder Methacrylat mit weniger als 30 C Atomen und mit aliphatischen oder cycloaliphatischen Resten ist;
d) Alkohol(e) sind; und
e) Hydroxy-cyclohexyl-phenyl-keton oder Diphenyl (2,4,6-trimethylbenzoyl)-phosphinoxid sind.

7. Verwendung der Zusammensetzung nach einem der Ansprüche 1 - 6 zur Beschichtung von Oberflächen.

8. Verfahren zur Beschichtung von Oberflächen, **dadurch gekennzeichnet, dass** die Zusammensetzung nach einem der Ansprüche 1 bis 6 auf eine Oberfläche aufgebracht wird und mit UV-Licht bestrahlt wird.

9. Formkörper, aufweisend eine Oberfläche, die mit einer der Zusammensetzungen gemäß Anspruch 1 bis 6 oder gemäß dem Verfahren nach Anspruch 8 beschichtet ist.

10. Formkörper aus einem transparenten thermoplastischen Polymer, aufweisend eine Oberflächenbeschichtung, die poröse Silica Nanopartikel, organisch lösliches Polymerharz, UV-vernetztes Polymerharz und einen UV-Initiator gemäß Anspruch 1 bis 6 aufweist.

11. Mehrschichtiges Erzeugnis enthaltend eine Substratschicht, die mindestens auf einer Seite eine zweite Schicht aufweist, wobei diese zweite Schicht aus Zusammensetzungen nach einem der Ansprüche 1 bis 6 hergestellt wird.

12. Mehrschichtiges Erzeugnis nach Anspruch 11, **dadurch gekennzeichnet, dass** die Substratschicht aus einem transparenten thermoplastischen Polymer besteht.

13. Mehrschichtiges Erzeugnis nach Anspruch 12, **dadurch gekennzeichnet, dass** das transparente thermoplastische Polymer Polycarbonat ist.

**Claims**

1. Composition containing

a) from 5 to 15 parts by weight of porous silica nanoparticles having a monomodal particle size distribution having a weight-average particle diameter $d_{50}$ = from 10 to 50 nm, or having a bimodal particle size distribution, having two fractions, one having a mean particle diameter $d_{50}$ = from 1 to 10 nm and one having a mean particle diameter $d_{50}$ = from 10 to 30 nm,

b) from 0.5 to 6 parts by weight of one or more organically soluble polymer resins selected from the group containing polyvinyl (co)polymers and polyacrylic (co)polymers,

c) from 0.2 to 3.0 parts by weight of one or more UV crosslinkable reactive diluents selected from at least one from the group hexanediol diacrylate; dipentaerythritol hexacrylate, tripropylene glycol diacrylate, pentaerythritol triacrylate, pentaerythritol tetracrylate, neopentyl glycol diacrylate, hydroxyethyl acrylate, hydroxyethyl methacrylate, bis[methacryloyloxyethyl] phosphate, glycidyl acrylates and methacrylates, and functional silanes,

d) solvents,

e) from 0.02 to 0.1 part by weight of a UV initiator system.

2. The composition according to claim 1, wherein the silica nanoparticles are dispersed in an organic solvent.

3. Coating composition according to claim 1, **characterised in that** the refractive index $n_B$ is < 1.45.

4. Coating composition according to claim 1, **characterised in that** the refractive index $n_B$ is < 1.40.

5. Coating composition according to claim 1, **characterised in that** the refractive index $n_B$ is < 1.35.

6. The composition according to claim 1, wherein

a) porous silica nanoparticles are particles having a monomodal particle size distribution having a weight-average particle diameter $d_{50}$ = from 10 to 50 nm, or having a bimodal particle size distribution, having two fractions, one having a mean particle diameter $d_{50}$ = from 1 to 10 nm and one having a mean particle diameter $d_{50}$ = from 10 to 30 nm;

b) is polymethyl (meth)acrylate;

c) is UV- or electron beam-crosslinkable, ethylenically unsaturated low molecular weight acrylate or methacrylate having fewer than 30 carbon atoms and having aliphatic or cycloaliphatic radicals;

d) are alcohol (s); and

e) are hydroxy-cyclohexyl phenyl ketone or diphenyl (2,4,6-trimethylbenzoyl)-phosphine oxide.

7. Use of the composition according to any one of claims 1 to 6 in the coating of surfaces.

8. Process for the coating of surfaces, **characterised in that** the composition according to any one of claims 1 to 6 is applied to a surface and irradiated with UV light.

9. Moulded body having a surface coated with one of the compositions according to claim 1 to 6 or by the process according to claim 8.

10. Moulded body of a transparent thermoplastic polymer, having a surface coating which contains porous silica nanoparticles, organically soluble polymer resin, UV-crosslinked polymer resin and a UV initiator according to claim 1 to 6.

11. Multi-layer product containing a substrate layer which has a second layer on at least one side, this second layer being produced from compositions according to any one of claims 1 to 6.

12. Multi-layer product according to claim 11, **characterised in that** the substrate layer consists of a transparent thermoplastic polymer.

13. Multi-layer product according to claim 12, **characterised in that** the transparent thermoplastic polymer is polycarbonate.

**Revendications**

1. Composition, contenant

a) 5 - 15 parties en poids de nanoparticules de silice poreuses ayant une distribution monomodale de tailles de particules avec un diamètre de particule en moyenne en poids d50 = 10 - 50 nm, ou ayant une distribution bimodale de tailles de particules, comportant deux fractions, une avec un diamètre de particule en moyenne en poids d50 = 1 - 10 nm et une avec un diamètre de particule en moyenne en poids d50 = 10 - 30 nm,
b) 0,5 - 6 parties en poids d'une ou de plusieurs résines polymères solubles dans des solvants organiques, choisies dans le groupe contenant des (co)polymères polyvinyliques et des (co)polymères polyacryliques,
c) 0,2 - 3,0 parties en poids d'un ou de plusieurs diluants réactifs réticulables aux UV, choisis parmi au moins l'un du groupe constitué par le diacrylate d'hexanediol, l'hexa-acrylate de dipentaérythritol, le diacrylate de tripropylèneglycol, le triacrylate de pentaérythritol, le tétraacrylate de pentaérythritol, le diacrylate de néopentylglycol, l'acrylate d'hydroxyéthyle, le méthacrylate d'hydroxyéthyle, le phosphate de bis-[méthacryloyloxy]-éthyle, les acrylates ou les méthacrylates de glycidyle ainsi que des silanes modifiés,
d) un/des solvant(s)
e) 0,02 - 0,1 partie en poids d'un système amorceur UV.

2. Composition selon la revendication 1, dans laquelle les nanoparticules de silice sont dispersées dans un solvant organique.

3. Composition de revêtement selon la revendication 1, **caractérisée en ce que** l'indice de réfraction $n_B$ est < 1,45.

4. Composition de revêtement selon la revendication 1, **caractérisée en ce que** l'indice de réfraction $n_B$ est < 1,40.

5. Composition de revêtement selon la revendication 1, **caractérisée en ce que** l'indice de réfraction $n_B$ est < 1,35.

6. Composition selon la revendication 1, dans laquelle

a) les nanoparticules de silice poreuses sont des particules ayant une distribution monomodale de tailles de particules avec un diamètre de particule en moyenne en poids d50 = 10 - 50 nm, ou ayant une distribution bimodale de tailles de particules, comportant deux fractions, une avec un diamètre moyen de particule d50 = 1 - 10 nm et une avec un diamètre moyen de particule d50 = 10 - 30 nm ;
b) est le poly[(méth)acrylate de méthyle] ;
c) est un acrylate ou méthacrylate de faible masse moléculaire, à insaturation éthylénique, réticulable sous irradiation UV ou par faisceau d'électrons, ayant moins de 30 atomes de carbone et comportant des radicaux aliphatiques ou cycloaliphatiques ;
d) est/sont un/des alcool(s) ; et
e) consiste en hydroxy-cyclohexyl-phényl-cétone ou oxyde de diphényl(2,4,6-triméthylbenzoyl)-phosphine.

7. Utilisation de la composition selon l'une quelconque des revendications 1 - 6 pour le revêtement de surfaces.

8. Procédé pour le revêtement de surfaces, **caractérisé en ce qu'**on applique sur une surface la composition selon l'une quelconque des revendications 1 à 6 et on l'irradie avec de la lumière UV.

9. Corps moulé, comportant une surface qui est revêtue avec l'une des compositions selon l'une quelconque des revendications 1 à 6 ou conformément au procédé selon la revendication 8.

10. Corps moulé à base d'un polymère thermoplastique transparent, comportant un revêtement superficiel qui comporte des nanoparticules de silice poreuse, une résine polymère soluble dans des solvants organiques, une résine polymère réticulée aux UV et un amorceur UV selon l'une quelconque des revendications 1 à 6.

11. Produit multicouche contenant une couche de support, qui comporte au moins d'un côté une deuxième couche, cette deuxième couche étant produite à partir de compositions selon l'une quelconque des revendications 1 à 6.

12. Produit multicouche selon la revendication 11, **caractérisé en ce que** la couche de support consiste en un polymère thermoplastique transparent.

13. Produit multicouche selon la revendication 12, **caractérisé en ce que** le polymère thermoplastique transparent consiste en polycarbonate.

**IN DER BESCHREIBUNG AUFGEFÜHRTE DOKUMENTE**

**In der Beschreibung aufgeführte Patentdokumente**

- DE 10311639 A1
- JP 61181809 A
- JP 2005179539 A
- EP 0050996 A
- US 4499217 A
- JP 2001019874 A
- WO 2006049008 A1
- US 4383057 A
- WO 2006048277 A
- EP 337695 A
- EP 0505737 A
- WO 2009090003 A
- US 2008248086 A1
- WO 2008068154 A
- US 2005137334 A
- WO 2007074494 A
- US 2006188664 A
- JP 2005262799 A
- US 2004191420 A
- JP 2004083856 A
- WO 9707056 A
- WO 03027015 A
- WO 03027034 A

**In der Beschreibung aufgeführte Nicht-Patentliteratur**

- **G. SCHRÖDER.** Technische Optik. Vogel Verlag, 1998
- Beschichtungen über Sol-Gel Prozesse. **M. KURSAWE ; V. HILARIUS ; G.PFAFF ; MERCK KGAA.** moderne Beschichtungsverfahren. Wiley-VCH, 2005
- Schnell. *Chemistry and Physics of Polycarbonats, Polymer Reviews,* 1964, vol. 9
- Synthesis of Poly(ester)carbonate Copolymers. **D.C. PREVORSEK ; B.T. DEBONA ; Y. KESTEN.** Journal of Polymer, Science. Corporate Research Center, 1980, vol. 19, 75-90
- Polycarbonates. **D. FREITAG ; U. GRIGO ; P.R. MÜLLER ; N. NOUVERTNE ; BAYER AG.** Encyclopedia of Polymer Science and Engineering. 1988, vol. 11, 648-718
- Polycarbonate. **U. GRIGO ; K. KIRCHER ; P.R. MÜLLER.** Becker/Braun, Kunststoff-Handbuch, Band 3/1, Polycarbonate, Polyacetale, Polyester, Celluloseester. Carl Hanser Verlag, 1992, vol. 3-1, 117-299